# EUROPEAN PATENT APPLICATION

(11) **EP 1 237 121 A2**
(43) Date of publication of application: **04.09.2002**
(21) Application number: 02251260.2
(22) Date of filing: 25.02.2002
(51) Int. Cl.: G06N 3/10

(54) **Implementing a neural network in a database system**

(30) Priority: 28.02.2001 US 797353
(71) Applicant: NCR INTERNATIONAL INC., Dayton, Ohio 45479 (US)
(72) Inventor: Frazier, John D, Romona, CA 92065 (US); Reed, Michael L, San Diego, CA 92120 (US)
(74) Representative: Cleary, Fidelma

(57) **Abstract**

A method and apparatus of implementing a neural network comprises storing a representation of the neural network in one or more storage modules. In one arrangement, the representation of the neural network comprises an object stored in a relational database management system or other type of database system. The neural network representation is accessed to perform an operation, e.g., a pattern recognition operation.

## Description

The invention relates to implementing neural networks in database systems.

Conventionally, a neural network (also referred as an artificial neural network) includes a relatively large number of interconnected processing elements (analogous to neurons) that are tied together with weighted connections (that are analogous to synapses). The term "neuron" refers to a brain cell of a human, and a "synapse" refers to the gap or connection between two neurons. An artificial neural network is designed to mimic a biological neural network made up of neurons and synapses. Artificial neural networks can be used to perform a number of different tasks, such as pattern recognition (e.g., image, character, and signal recognition) and other tasks. Advantages of artificial neural networks include their ability to learn and their ability to produce relatively more accurate results (than those produced by standard computer systems) despite distortions in input data.

A typical artificial neural network has three layers: an input layer, a hidden layer, and an output layer. The input layer receives signals from outside the neural network, with the signals passed to the hidden layer, which contains interconnected neurons for pattern recognition and interpretation. The signals are then directed to the output layer. In the hidden layer, neurons are each assigned a weight, which can be changed by performing training procedures.

To train a neural network, a training data set is used. Once a neural network is trained, the neural network can be used to perform pattern recognition or other tasks on a target data set, which contains the target pattern or object to be processed by the neural network.

From a first aspect, the invention resides in a database system comprising:
one or more storage modules;
at least one relational table containing at least one object representing a neural network, the relational table being stored in the one or more storage modules; and
at least one processor adapted to perform an operation using the neural network representation.
The processor(s) is adapted to perform a pattern recognition operation using the neural network representation, in particular by receiving an input pattern and joining a portion of the input pattern with the neural network representation.

The database system preferably comprises an object relational database management system, the neural network representation being stored as an object therein.

The storage module(s) preferably store training data, the processor(s) being adapted to train the neural network by modifying the neural network representation using the training data. In particular, training is achieved by adjusting weights of the neural network representation, the weights being contained in a blob and the blob representing a hidden layer of the neural network representation. The storage module(s) further store answer data, the processor(s) being adapted to train the neural network representation using the training data and the answer data, the answer data containing expected answers when the training data is applied as input to the neural network representation.

The relational table is capable of storing data according to predefined data types, the neural network representation being one of the predefined data types.

In one embodiment, the database system comprises a plurality of storage modules, the processor(s) comprising a plurality of nodes each capable of accessing a corresponding storage module, the neural network representation being duplicated in each of the storage modules. In one embodiment a plurality of processors perform the operation in parallel.

From a further aspect, the invention resides in a process of implementing a neural network, comprising:
storing a representation of the neural network in a database system;
providing one or more user-defined methods to perform tasks using the neural network representation;
receiving a request to perform an operation; and
invoking the one or more user-defined methods to access the representation of the neural network to perform the operation.

Invoking the one or more user-defined methods to perform the operation preferably comprises performing a pattern recognition operation, for example by invoking a first method to perform a pattern matching operation and a second method to train the neural network by adjusting weights of neural network elements in the representation. In addition, another method to configure the neural network may be invoked by specifying an input size, an output size, and a hidden layer size.

The invention may also be defined in terms of a database system comprising:
a storage module storing a relational table containing a representation of a network of interconnected processing elements, the table further containing weights associated with at least some connections between the interconnected processing elements; and
a controller adapted to train the network for pattern recognition by adjusting the weights.

From yet a further aspect, the invention may be defined as an article comprising at least one storage medium containing instructions that when executed cause a database system to:
create a neural network object;
store the neural network object in a relational table; and
perform a pattern recognition operation using the neural network object.

The instructions when executed preferably cause the database system to:
store training data; and
train the neural network object using the training data.

Input data is preferably stores and applied to the neural network object to perform the pattern recognition operation. The neural network object may also be configured by specifying an input size, an output size, and a hidden layer size.

An embodiment of the invention will now be described with reference to the accompanying drawings in which:
Fig. 1 is a block diagram of a database system, in accordance with an embodiment coupled to a client terminal.
Fig. 2 illustrates a neural network search object (NNSO) and other data stored in the database system of Fig. 1.
Fig. 3 is a flow diagram of a process to implement a neural network in the database system of Fig. 1.
Fig. 4 is a flow diagram of a process of defining a neural net search object and associated methods.

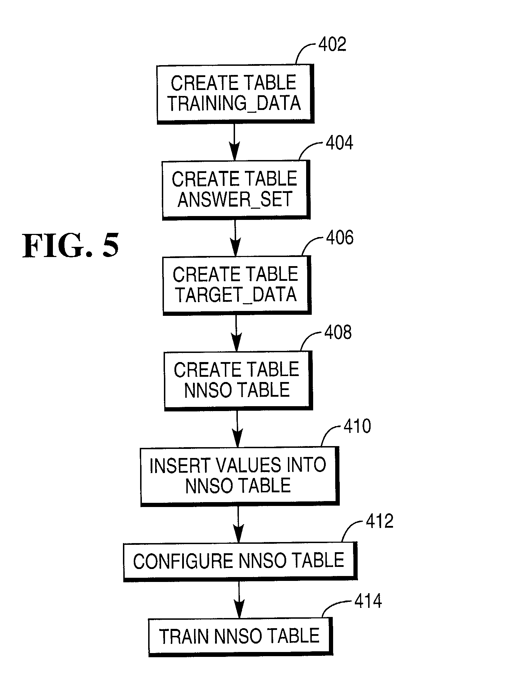

Fig. 5 is a flow diagram of a process of configuring and training a neural network.
Fig. 6 illustrates an example neural network represented by the NNSO of Fig. 2.

In the following description, numerous details are set forth to provide an understanding of the present invention. However, it will be understood by those skilled in the art that the present invention may be practiced without these details and that numerous variations or modifications from the described embodiments may be possible.

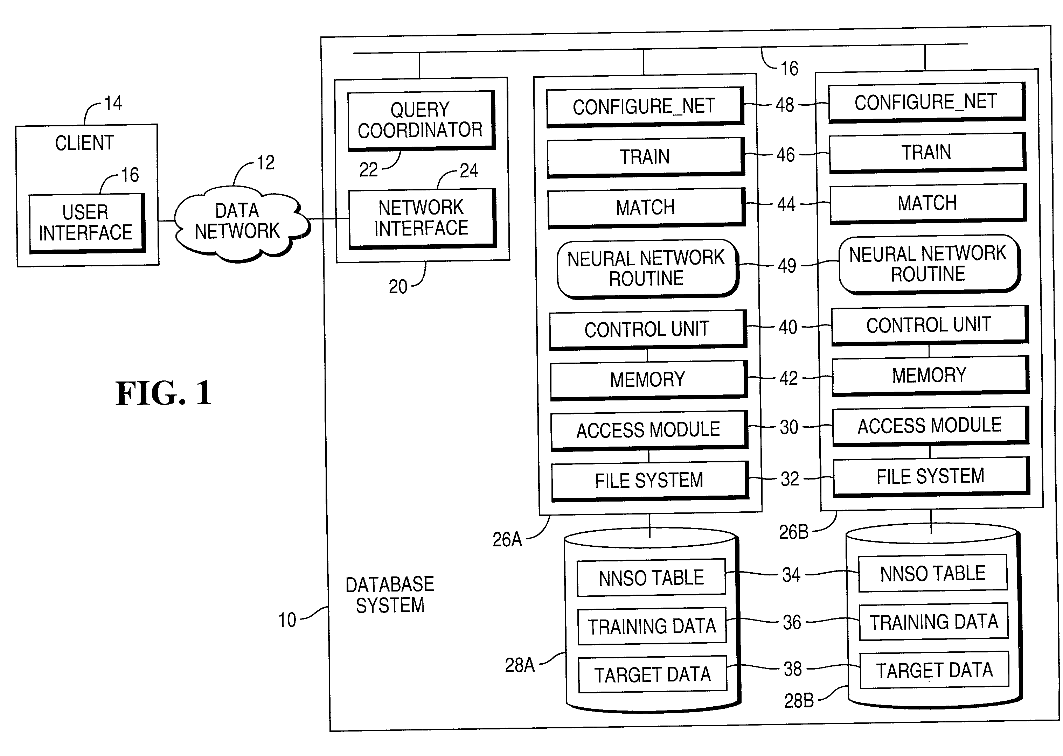

Fig. 1 illustrates one example embodiment of a database system 10 that is coupled to a client system 14 over a data network 12. Examples of the data network 12 include a local area network (LAN), a wide area network (WAN), or a public network (such as the Internet). A user at the client system 14 is able to issue requests, such as Structured Query Language (SQL) statements or other standard database-query statements, to the database system 10 to extract data and to perform other tasks in the database system 10. SQL is one language of relational databases, and is defined by the American National Standards Institute (ANSI). A user is able to issue SQL statements from a user interface 16 in the client system 14. In accordance with some embodiments, SQL statements to invoke neural network capabilities of the database system 10 can be issued by a user from the client terminal 14.

In the illustrated embodiment, the database system 10 includes multiple nodes 26A and 26B (two or more). In an alternative embodiment, the database system 10 can be a single-node system. The nodes 26A and 26B are coupled by an interconnect network 50, which is in turn connected to an interface node 20. The interface node 20 includes a query coordinator 22 to receive queries from the client system 14, to parse the received requests, and to generate access requests to one or more access modules 30 in corresponding nodes 26A, 26B. The interface node 20 also includes a network interface 24 that enables communications over the data network 12.

Each access module 30 includes a database manager that creates, modifies, or deletes definitions of tables; inserts, deletes, or modifies rows within the tables; retrieves information from definitions and tables; and locks databases and tables. In one example, the access module is the access module processor (AMP), used in some TERADATA® database systems from NCR Corporation. Multiple AMPs can reside on each node 26.

Each access module 30 sends input/output (I/O) requests to and receives data from a respective storage module 28 through a respective file system 32. Although referred to in the singular, "storage module" can refer to one or plural storage devices, such as hard disk drives, disk arrays, tape drives, and other magnetic, optical, or other media.

In accordance with some embodiments of the invention, an object (referred to as a neural network search object or NNSO) according to a predefined data type is stored in each storage module 28 to enable the implementation of a neural network in the database system 10. A neural network is a mathematical model that is implemented as a software routine or routines executable to recognize patterns or to perform other tasks. A neural network is "trained" to recognize patterns by presenting it correct and incorrect patterns and supplying feedback when patterns are recognized. In accordance with some embodiments, the neural network model is stored in neural network search objects, which are stored in NNSO tables 34 stored in storage modules 28A and 28B. More generally, a "neural network object" refers to any object (e.g., file, data, software method, software routine or module, etc.) that represents a neural network and that is accessible by other components to perform operations (e.g., pattern recognition).

In some embodiments, each NNSO table 34 is a relational table in a relational database management system (RDBMS). Data types defined in many relational database management systems include relatively simple data types, such as integers, real numbers, and character strings. For more complex data types, such as those that include audio data, video data, multimedia data, image data, formatted documents, maps, and so forth, an object relational management database system enables the definition of "complex" data types to store such information in objects. In one embodiment, the NNSO is an object of an object relational database management system. Alternatively, in another embodiment, the NNSO is defined as a "simpler" data type in a relational database management system. Instead of relational database management systems, other embodiments can employ other types of database systems in which user-defined methods or functions can be created to implement the neural network.

The NNSO, representing a neural network model or algorithm, is trained by using training data 36, also stored in the storage modules 28. Once trained, the NNSO is able to perform pattern recognition of input target data 38, also stored in the storage modules 28. A benefit of the arrangement shown in Fig.1 is that the NNSO table 34, training data 36, and target data 38 are stored on multiple storage modules that are independently accessible by corresponding nodes 26A, 26B. As a result, the neural network implemented with NNSOs distributed across the different nodes 26A, 26B can be executed in parallel to enhance performance. This is particularly advantageous where the pattern recognition involves relatively complex data, such as DNA sequences, images, and so forth.

In one arrangement, duplicate copies of the NNSO and NNSO table 34 are stored in the multiple storage modules 28, with different portions of the input target data 38 distributed across the multiple storage modules for parallel execution. For example, the NNSO table 34 can be duplicated by the parallel logic to the different nodes in response to an SQL Select statement in which a comparison of the data in the NNSO table 34 is requested. In one embodiment, the duplication of the NNSO table 34 is performed by a database optimizer program, which is responsible for selecting a "low cost" execution plan for a given query.

Three different methods, associated with the NNSO data type, are defined for execution in each node 26. A first method is a CONFIGURE_NET method 48, which is used for configuring the NNSO stored in the NNSO table 34. A TRAIN method 46 is used to train the NNSO in each storage module 28. A MATCH method 44 is used to match the target data 38 using the NNSO. Other methods can also be defined for neural network operations. The methods 44, 46, and 48 (and other methods) are initially stored in each storage module 28 and loaded into the node 26 for execution when called or invoked by a neural network routine 49 executable in each node 26. The various software routines, modules, or methods are executable on one or plural control units 40 in the node 26. The node 26 also includes a memory 42 that is coupled to the one or plural control units 40. Although illustrated as single components, the control unit 40 and memory 42 can be multiple components in other embodiments.

To enhance parallelism, a greater number of nodes can be used for implementing the neural network in accordance with some embodiments. Alternatively, the NNSO and associated methods are implementable on a single node in the database system 10.

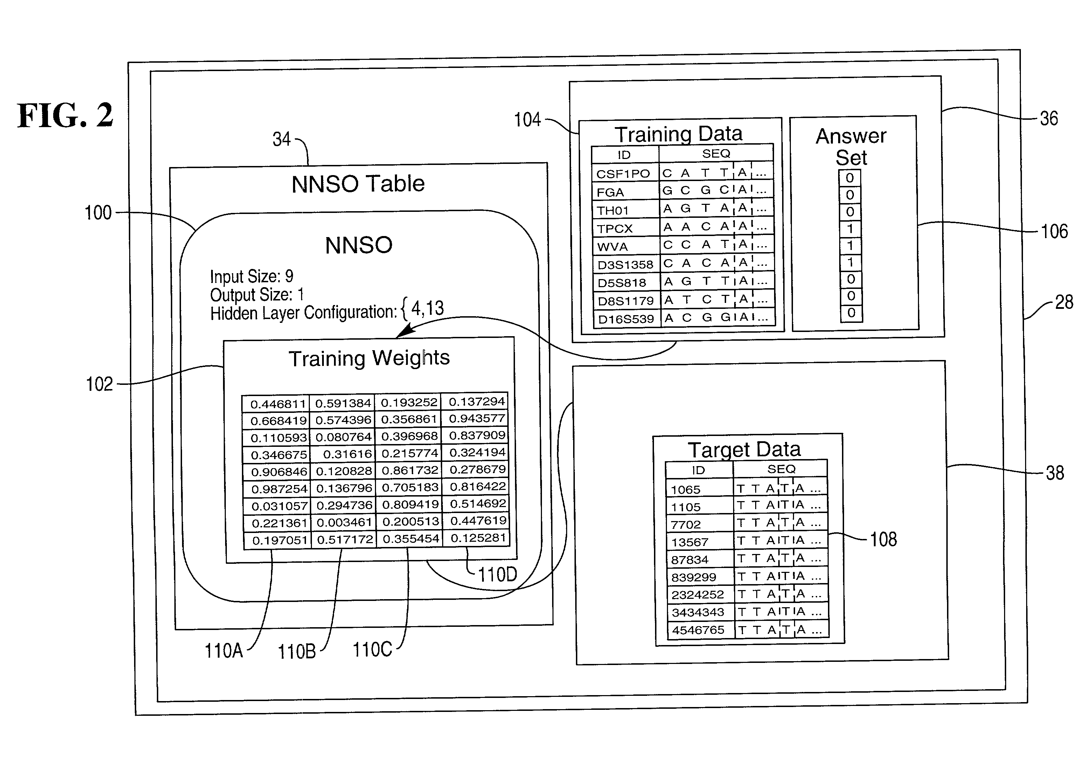

Fig. 2 shows the NNSO table 34, training data 36, and target data 38 in more detail. The NNSO table 34 stores an NNSO 100, which contains training weights 102. The training weights are initially set to random or some other predetermined values. In some embodiments, the training weights 102 are represented as a blob (binary large object). A blob is a large object having a collection of bytes, which in this case represent weights. In another embodiment, the training weights 102 are represented in a different type of object or file. The training weights 102 are represented as a matrix. In the example of Fig. 2, the matrix size is nine rows by four columns. Further, in the example of Fig. 2, the input size of the NNSO is 9 inputs, and the output size is 1 output.

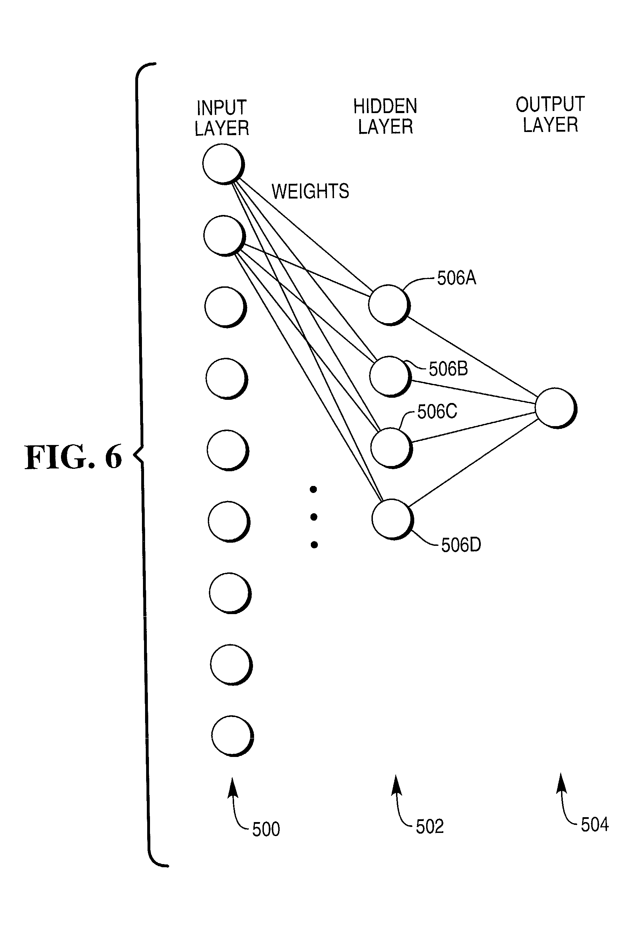

A neural network also includes one or more hidden layers of neurons. A three-layered neural network model is shown in Fig. 6. The input layer 500 has nine input neurons to receive nine inputs, as defining by the NNSO 100. The hidden layer 502 (one hidden layer in this example) has a number of pattern neurons that are "fully" connected to the input layer neurons. "Fully" connected means that each input layer neuron is connected to each hidden layer or pattern neuron 506A, 506B, 506C, or 506D. Weights are applied to each connection between a pair of input layer neuron and hidden layer neuron 506. The four hidden layer neurons 506A-D are connected to one neuron (corresponding to the one output defined by the NNSO 100) in the output layer 504.

Each column 110A, 110B, 110C, or 110D of the training weights matrix 102 shown in Fig. 2 contains the weights of connections between a respective pattern neuron 506 and the nine input layer neurons. Thus, for example, the column 110A contains the nine weights of the nine connections between the pattern neuron 506A and the respective nine input layer neurons. The column 110B contains the weights of the connection between the pattern neuron 506B and the input layer neurons, and so forth. In the example of Fig. 6, the hidden layer array is 4x1 (one hidden layer with four neurons). In other arrangements, an MxN hidden layer array can be employed, which indicates N layers each with M pattern neurons per layer.

The inputs received by the input layer neurons are multiplied by respective weight values and provided to the pattern neurons 506A-506B. Each neuron 506 sums the received nine weighted inputs. The summed values are applied through a function (e.g., a non-linear function) to produce an output. The function can be a threshold function to determine whether the summed value is above or below a threshold to correspond to a true or false state.

In one example, a neural network employing a "Backprop" algorithm is used. The Backprop algorithm enables input data to be propagated forward in the neural network for pattern recognition, and the feedback of failure information backwards for training purposes. In other embodiments, other types of neural networks can be implemented with the neural network object 100.

The value of the training weights 102 is set by using training data 36, which includes an input training table 104 (also referred to as the TRAINING_DATA table) and an expected answer set table 106 (also referred to as the ANSWER_SET table). Thus, in response to the input training table 104, the NNSO 100 is expected to produce an answer listed in the answer set table 106. The input training table 104 contains a number of rows corresponding to different DNA sequences. Based on the DNA sequences, the output is expected to be "0" (false) or "1" (true). Thus, in the example of Fig. 2, the NNSO is trained to return a true value for certain types of DNA sequences and return false values for other DNA sequences. In other embodiments, the NNSO can be trained to recognize other types of data (e.g., images, audio, multimedia, etc.)

Once values for the training weights 102 have been set using the training data 36, a target data table 108 (also referred as the TARGET_DATA table), which makes up the target data 38, is provided as input to the NNSO 100 for pattern matching. As shown in Fig. 2, the target data table 108 includes several rows corresponding to different DNA sequences. Based on the training weights 102, the NNSO 100 will produce a true result for certain ones of the DNA sequences and produce a false result for other DNA sequences in the target database 108.

In further embodiments, instead of a single NNSO table 34, multiple NNSO tables can be stored in each storage module 28. The multiple NNSO tables can store NNSOs associated with other types of input target data. For example, one NNSO table is used for performing DNA sequence matching, a second NNSO table is used for performing facial image matching, a third NNSO table is used for performing vehicle matching, and so forth. In yet another embodiment, each NNSO table 34 contains multiple NNSOs. For example, one NNSO can be trained to detect for a first pattern in the target data 38, while another NNSO can be trained to detect for another pattern in the target data 38.

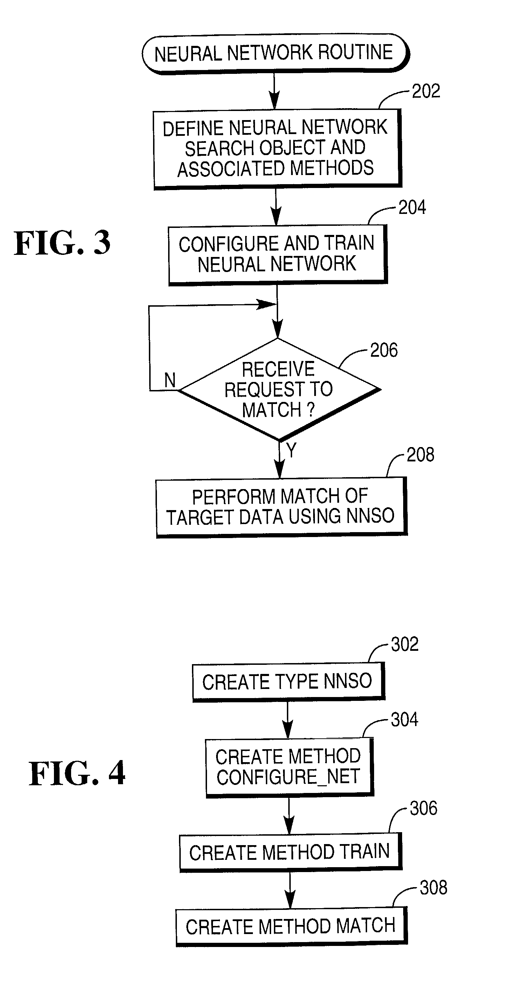

Fig. 3 is a flow diagram of a process performed by the neural network routine 49 in each node 26. The neural network routine 49 first defines (at 202) the NNSO 100 and the associated methods 44, 46, and 48. Next, the various tables 34, 104, 106, and 108 are configured (at 204) and the neural network is trained (by adjusting the training weights of the NNSO). Next, the neural network routine determines if a request to perform matching has been received (at 206). For example, a user can send a request (e.g., in the form of an SQL SELECT statement) from the client terminal 14 (Fig. 1). Alternatively, the pattern matching can be performed in response to some other stimuli. If a request to perform matching is received, the neural network routine 49 performs (at 208) a match by calling the MATCH method 44, which matches the target data 38 using the NNSOs 100 stored in the tables 34 to produce output results.

Fig. 4 is a flow diagram of the process (202) of defining the NNSO 100 and associated methods. First, the neural network routine 49 creates an NNSO data type (at 302). In one example, the following SQL CREATE TYPE statement can be used:
CREATE TYPE NNSO (InputSize integer, OutputSize integer, HiddenLayer Array [1..2] integer, TrainingWeights blob).

The parameter InputSize represents the number of inputs to the NNSO 100, the parameter OutputSize represents the number of outputs, and the HiddenLayer array represents an array of interconnected pattern neurons, which are associated with training weights in the blob TrainingWeights. Effectively, the CREATE TYPE statement binds the neural network into the database system 10 as a new data type. Next, the neural network routine 49 creates (at 304) the CONFIGURE_NET method, which in one example embodiment can be performed by issuing the following SQL statement:
CREATE METHOD CONFIGURE_NET(INTEGER, INTEGER, ARRAY [1..2] INTEGER).

The CONFIGURE_NET method specifies the input size (InputSize), output size (OutputSize), and array size of the hidden layer. The TRAIN method is created (at 306) by issuing the following statement:
CREATE METHOD TRAIN(STRING, STRING),
where the first string represents the input training table 104 and the second string represents the answer set table 106. The MATCH method is created (at 308) by issuing the following statement:

### CREATE METHOD MATCH(STRING) RETURNS BOOLEAN.

The input string to the MATCH method is the target data table 108, and the output is the boolean state true or false. After creation of the NNSO data type and the methods 44, 46, and 48, the neural network routine 49 configures and trains various tables (204 in Fig. 3). The routine 49 creates (at 402) the TRAINING_DATA table 36 by issuing the following statement:
CREATE TABLE TRAINING_DATA (ID string, SEQ string). An identifier (ID) is assigned to each DNA sequence (SEQ) in the TRAINING_DATA table. The ANSWER_SET table is created (at 404) by providing the following statement:
CREATE TABLE ANSWER_SET (ANSWER Boolean).
The ANSWER_SET table contains entries that have a true or false state. The TARGET_DATA table is created (at 406) by issuing the following statement:
CREATE TABLE TARGET_DATA (ID string, SEQ string).
The NNSO table 34 is created (at 408) by issuing the following statement:
CREATE TABLE NNSO_TABLE (ID integer, DESCRIPTION string, NN NNSO).
The NNSO table 34 is associated with an identifier (ID), a description (DESCRIPTION), and the NNSO having the type created at 302 in Fig. 4. Once the NNSO table is created, values can be inserted (at 410) into the NNSO table 34. In one example, this is accomplished by issuing the SQL INSERT statement:
INSERT INTO NNSO_TABLE VALUES (1, "Backprop", NNSO()).
The INSERT statement issued above inserts one NNSO into the NNSO table 34, with the neural network defined as the Backprop neural network.

Next, the content of the NNSO table 34 is updated by calling the CONFIGURE_NET method. The NNSO table 34 is configured (at 412) to have 9 inputs, 1 output, and a 4x1 hidden array, using the SQL UPDATE statement:
UPDATE NNSO_TABLE SET:NN=:NN.CONFIGURE_NET(9,1,ARRAY(4,1)).
The CONFIGURE_NET method is invoked in the UPDATE statement. After the NNSO table 34 has been configured, the neural network routine 49 calls the TRAIN method to train the NNSO using the TRAINING_DATA table 104 and the ANSWER_SET table 106:
UPDATE NNSO_TABLE
SET:NN=:NN.TRAIN(TRAINING_DATA,ANSWER_SET).

After the NNSO table 34 has been configured and trained, the MATCH method is called, in response to some stimuli, in a SELECT statement to perform pattern recognition in the target data 38 using the NNSO:
SEL *FROM TARGET_DATA, NNSO_TABLE WHERE NN.MATCH(TARGET_DATA.SEQ)=TRUE.
The SELECT statement invokes the MATCH method and performs a join of the NNSO from the NNSO table 34 with column(s) of the TARGET_DATA table 108. Generally, a join operation involves combining rows or other objects from plural tables. Data having characteristics of two or more patterns can be obtained by joining two or more NNSO searches (e.g., two or more NNSOs in each NNSO table) in a query.

By implementing a neural network in a database system, such as a relational database management system, performance of the neural network is enhanced by taking advantage of efficient data access mechanisms that are present in such database systems. Further, in parallel database systems that have multiple processors capable of parallel access to data in the database system, the neural network performance is further enhanced by distributing the pattern searching across parallel processors. The parallel processors can be software routines executable on plural control units in a single node or in plural nodes. One example of a parallel database system is the TERADATA® database system from NCR Corporation.

A further benefit in some embodiments is that the neural network can be defined as an object, such as an object in an object relational database management system. The definition of a neural network as an object in a database system simplifies neural network implementation.

The various systems discussed above (client system and database system) each includes various software routines or modules. Such software routines or modules are executable on corresponding control units. The various control units include microprocessors, microcontrollers, or other control or computing devices. As used here, a "controller" or "processor" refers to a hardware component, software component, or a combination of the two. A "controller" or "processor" can also refer to plural hardware components, software components, or a combination of hardware components and software components.

The storage modules referred to in this discussion include one or more machine-readable storage media for storing data and instructions. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; or optical media such as compact disks (CDs) or digital video disks (DVDs). Instructions that make up the various software routines or modules in the various devices or systems are stored in respective storage units. The instructions when executed by a respective control unit cause the corresponding device or system to perform programmed acts.

The instructions of the software routines, or modules are loaded or transported to each device or system in one of many different ways. For example, code segments including instructions stored on floppy disks, CD or DVD media, a hard disk, or transported through a network interface card, modem, or other interface device are loaded into the device or system and executed as corresponding software routines or modules. In the loading or transport process, data signals that are embodied in carrier waves (transmitted over telephone lines, network lines, wireless links, cables, and the like) communicate the code segments, including instructions, to the device or system. Such carrier waves are in the form of electrical, optical, acoustical, electromagnetic, or other types of signals.

## Claims

1. A database system comprising:
one or more storage modules;
at least one relational table containing at least one object representing a neural network, the relational table being stored in the one or more storage modules; and
at least one processor adapted to perform an operation using the neural network representation.

2. The database system of claim 1, wherein the processor(s) is adapted to perform a pattern recognition operation using the neural network representation.

3. The database system of claim 2, wherein the processor(s) is adapted to receive an input pattern and to join a portion of the input pattern with the neural network representation to perform the pattern recognition.

4. The database system of any preceding claim, comprising an object relational database management system, the neural network representation stored as an object in the object relational database management system.

5. The database system of any preceding claim, wherein the storage module(s) further store training data, the processor(s) being adapted to train the neural network by modifying the neural network representation using the training data.

6. The database system of claim 5, wherein the processor(s) is adapted to adjust weights of the neural network representation in training the neural network .

7. The database system of claim 6, wherein the neural network representation comprises a blob containing the weights.

8. The database system of claim 7, wherein the storage module(s) further stores answer data, the processor(s) being adapted to train the neural network representation using the training data and the answer data, the answer data containing expected answers when the training data is applied as input to the neural network representation.

9. The database system of claim 7, wherein the blob represents a hidden layer of the neural network representation.

10. The database system of any preceding claim, wherein the relational table is capable of storing data according to predefined data types, the neural network representation being one of the predefined data types.

11. The database system of any preceding claim, further comprising methods invocable by the processor(s) to perform tasks associated with the neural network representation.

12. The database system of any preceding claim, wherein the processor(s) is responsive to a Structured Query Language statement to perform the operation.

13. The database system of any preceding claim, wherein the processor(s) comprises one or more software routines.

14. The database system of any preceding claim, comprising a plurality of storage modules, wherein the processor(s) comprise a plurality of nodes each capable of accessing a corresponding storage module.

15. The database system of claim 14, wherein the neural network representation is duplicated in each of the storage modules.

16. The database system of any preceding claim wherein the plurality of processors perform the operation in parallel.

17. A process of implementing a neural network, comprising:
storing a representation of the neural network in a database system;
providing one or more user-defined methods to perform tasks using the neural network representation;
receiving a request to perform an operation; and
invoking the one or more user-defined methods to access the representation of the neural network to perform the operation.

18. The process of claim 17, wherein invoking the one or more user-defined methods to perform the operation comprises performing a pattern recognition operation.

19. The process of claim 17, wherein invoking the one or more user-defined methods comprises invoking a first method to perform a pattern matching operation.

20. The process of claim 19, wherein invoking the user-defined methods further comprises invoking a second method to train the neural network by adjusting weights of neural network elements in the representation.

21. The process of claim 20, wherein invoking the user-defined methods comprises invoking another method to configure the neural network by specifying an input size, an output size, and a hidden layer size.

22. A database system comprising:
a storage module storing a relational table containing a representation of a network of interconnected processing elements, the table further containing weights associated with at least some connections between the interconnected processing elements; and
a controller adapted to train the network for pattern recognition by adjusting the weights.

23. An article comprising at least one storage medium containing instructions that when executed cause a database system to:
create a neural network object;
store the neural network object in a relational table; and
perform a pattern recognition operation using the neural network object.

24. The article of claim 23, wherein the instructions when executed cause the database system to:
store training data; and
train the neural network object using the training data.

25. The article of claims 23 or 24, wherein the instructions when executed cause the database system to store input data and to apply input data to the neural network object to perform the pattern recognition operation.

26. The article of claim 25, wherein the instructions when executed cause the database system to configure the neural network object by specifying an input size, an output size, and a hidden layer size.
